# EUROPÄISCHE PATENTSCHRIFT

(11) **EP 0 380 713 B1**
(45) Veröffentlichungstag und Bekanntmachung des Hinweises auf die Patenterteilung: **17.03.1993**
(21) Anmeldenummer: 89101484.7
(22) Anmeldetag: 28.01.1989
(51) Int. Cl.: B09B 3/00, C04B 18/10

(54) **Kompaktierung von Industriestäuben und Deponie der Kompaktate**
Compaction of industrial dusts and disposal of the compacted material
Compactage de poussières industrielles et décharge des matériaux compacts

(43) Veröffentlichungstag der Anmeldung: 08.08.1990
(73) Patentinhaber: RHEINISCHE BAUSTOFFWERKE GMBH & CO. KG, 50127 Bergheim (DE)
(72) Erfinder: Mühlroth, Hans-Jürgen, D-5132 Übach-Palenberg (DE); Paterok, Dietmar, Dipl.-Volksw., D-5020 Frechen 4 (DE); Schmidtke, Horst, D-5138 Heinsberg (DE)
(74) Vertreter: Mey, Klaus-Peter, Dr.-Ing. Dipl.-Wirtsch.-Ing.

(56) Entgegenhaltungen:
- DE-A- 2 407 487
- DE-A- 2 415 023
- DE-A- 3 630 107
- DE-A- 3 641 786
- GB-A- 5 976
- US-A- 4 354 878
- CHEMICAL ABSTRACTS, Band 99, Nr. 22, 1983, Seite 298, Zusammenfassung Nr. 180662t, Columbus, Ohio, US; & JP-A-58 27221 (Kawasaki Heavy Industries, Ltd) 08-06-1983

## Beschreibung

Die Erfindung bezieht sich auf ein Verfahren zur Verarbeitung von Rückständen aus Verbrennungsanlagen, wobei die Rückstände mit Bindemitteln und/oder Zuschlagstoffen vermischt und nach Art der Kalksandsteinherstellung mit hohem Preßdruck unter starker Verdichtung zu stapelfähigen Formsteinen verpreßt werden.

Die Müllentsorgung bereitet weltweit zunehmend Probleme. Dem ständig wachsenden Entsorgungsbedürfnis der privaten Haushalte und der Industrie stehen kaum noch ausreichend verfügbare Deponien für die Zukunft zur Verfügung. Die zu entsorgenden Abfälle werden zudem zunehmend aggressiver und bedrohen die Umwelt. Dies gilt insbesondere für die Auswirkungen auf den Wasserhaushalt. Im Hinblick auf die ständig wachsenden Müllberge bleibt als Ausweichlösung eigentlich nur eine Volumenverringerung, indem der anfallende Müll in Verbrennungsanlagen verarbeitet wird. Durch die Müllverbrennung wird der anfallende Müllberg volumensmäßig um ca. 80 % seines ursprünglichen Volumens reduziert. Die verbleibenden Rückstände wie Rostaschen und Verbrennungsschlacken, vor allem aber die Filterstäube aus der Rauchgasreinigung stellen wegen ihrer hohen Kontaminierung, insbesondere mit Schwermetallen und anderen toxischen Stoffen, die Betreiber der Müllverbrennungsanlagen vor große Entsorgung-, bzw. Deponieprobleme.

Moderne Entsorgungsverfahren müssen verschiedene Voraussetzungen erfüllen. Gegenüber den Ausgangsstoffen müssen die deponierten Stoffe insbesondere eine geringe Wasserlöslichkeit bzw. Auslaugbarkeit (Eluierbarkeit) aufweisen, um das Grundwasser nicht zu gefährden. Der bekannte Stand der Technik sieht hier bisher vor, Filterstäube naß aufzubereiten. Dabei entstehen nachteilig wiederum Schlammrückstände, die auf Sondermülldeponien verbracht werden müssen. Bei allen bisher betriebenen Entsorgungs- und Deponieverfahren entstehen darüberhinaus verhältnismäßig hohe Kosten durch entsprechend aufwendige Dichtungsmaßnahmen und Kontrolleinrichtungen an den Deponien, die in der Regel kaum wieder erwirtschaftet werden können.

Aus Chemical Abstracts, Band 99, Nr. 22, 1983 Seite 298 ist ein Verfahren nach dem Oberbegriff des Hauptanspruchs der eigenen Erfindung bekannt. Es wird die Asche von Müllverbrennungsanlagen auf Korngrößen bis und unter 2 mm zermahlen, anschließend untermischt mit Fraktionen vorgesehener Korngrößen, und erst darauf mit Sand, Zement, Wasser vermengt und kompaktiert. Ein Entsorgungsproblem insbesondere stark kontaminierter Abfallstoffe wird nicht erwähnt und kann auf diese Weise nicht gelöst werden. Eine Stapelbarkeit der nach dieser Druckschrift hergestellten Kompaktate ohne Nut und Feder und insbesondere ohne ein allseitiges Nut- und Federsystem zu Deponiekörpern mit begehbaren Kontrollgängen ist hierbei ebenso weder vorgesehen noch durchführbar.

Die GB-A-5976 betrifft die Herstellung von Auskleidungssteinen, bestehend aus einer Kombination von Asche, Bauschutt und Klinkerrückständen von Abwasserschlämmen. Diese werden klassiert, von Metall befreit und mit reinem bituminösem Material sowie einem Prozentsatz von Portlandzement ohne Zugabe von Öl, Flüssigkeit oder anderen Fluxmitteln untermischt unter hohem Druck komprimiert. Auch dieser Druckschrift ist nicht der geringste Hinweis auf ein Entsorgungsproblem, insbesondere auf stark kontaminierte Abfallstoffe zu entnehmen.

Es ist daher Aufgabe der Erfindung, ein Verfahren und eine Deponiemöglichkeit vorzustellen, mittels derer die genannten Nachteile vermieden bzw. Schwierigkeiten ausgeräumt werden können. Insbesondere sollen hochgiftige Industriestäube in ein unschädliches und umweltverträgliches Produkt durch Kompaktierung verwandelt werden. Das Kompaktierverfahren soll ferner leicht und kostengünstig durchführbar sein und Kompaktate erzeugen, die nicht auf Sondermülldeponien gelagert werden müssen.

Die Lösung der gestellten Aufgabe gelingt erfindungsgemäß dadurch, daß die Formsteine mit Rostaschen, Verbrennungsschlacken und/oder mineralischen Rückstäuben aus der nassen, halbtrockenen und trockenen Rauchgasreinigung mit hoher Kontaminierung und toxischen Stoffen zur umweltneutralen Entsorgung schwer- bzw. überhaupt nicht mehr eluierbar hergestellt und als Baumaterial zur Errichtung einer Deponie in Hoch- und /oder Tieflage zugeführt und dabei unter Bildung von begehbaren Kontrollgängen und -schächten im Innern der Deponie in regelmäßiger Anordnung neben- und/oder übereinander gestapelt werden.

Das Kompaktieren von mineralischen Rückständen aus der Rauchgasreinigung von Müllverbrennungsanlagen wird erfindungsgemäß insbesondere für Rostaschen aus Müllverbrennungsanlagen, Verbrennungsschlacken aus diesen Betrieben soweit sie nicht einer anderen Verwertung zugeführt werden können, mineralischen Rückständen aus der nassen, halbtrockenen und trockenen Rauchgasreinigung industrieller und kommunaler Müllverbrennungsanlagen eingesetzt, wobei auch Kombinationen der genannten Stoffe verwertet werden können. Die Eluierbarkeit der eingesetzten Abfallstoffe wird erfindungsgemäß durch ihre Verdichtung mittels mechanischer oder hydraulischer Pressen herabgesetzt. Die stark toxischen und hoch kontaminierten Rückstände, hier insbesondere die mineralischen Rückstände der Rauchgasreinigungen, werden durch die dargestellte Kompaktierungsmethode nochmals volumenmäßig auf ca. 40 - 60 % ihres ursprünglichen Volumens verdichtet. Durch die Kompaktierung werden diese derzeit nicht entsorgbaren Abfallstoffe schwer- bzw. überhaupt nicht mehr eluierbar (auslaugbar). Die Auswirkungen auf das Grundwasser werden auf ein Minimum reduziert bzw. gänzlich ausgeschlossen.

Hierbei sollen insbesondere herkömmliche Bausteinpressen zum Einsatz kommen, mit Kompaktatgrößen bis ca. 500 x 300 x 250 mm. Größere Formate bleiben der maschinentechnischen Entwicklung vorbehalten. Die Verdichtung der Kompaktate in den Pressen erfolgt durch entsprechende mechanische Pressverdichtung, durch zusätzlichen Einsatz von Rüttelmethoden oder durch Evakuieren der Formkästen während des Pressvorganges.

Durch die erfindungsgemäße Stapeldeponiemethode wird sichergestellt, daß seitlich anströmende Grundwässer und auftreffende Niederschlagswässer wirksam um den Deponiekörper bzw. unterhalb von diesem vorbeigeführt werden. Eine Durchdringung der Deponie erfolgt nicht. Die Errichtung (Einstapelung) des Deponiekörpers erfolgt mit druckfesten Kompaktaten. Bei der erfindungsgemäß dargestellten Deponiemethode können sowohl horizontale als auch vertikale Kontrollgänge und -schächte eingestapelt werden, so daß die Deponie auf Dauer von innen her kontrollierbar ist. Aufwendige Kontrollbrunnen zur Beobachtung des Grundwassers außerhalb des Deponiekörpers sind damit nicht mehr erforderlich. Nach Erreichen der endgültigen Deponiehöhe wird die Oberfläche der Deponie wie vorbeschrieben abgedichtet. Der so allseitig abgedichtete Deponiekörper wird mit kulturfähigem Boden angedeckt und entsprechend den jeweiligen Standortgegebenheiten eingegrünt.

Durch die dargestellte Massen- und Mengenreduzierung der Abfälle wird der bisherige Deponiebedarf um ein vielfaches reduziert. Es können gleichzeitig mehrere Entsorgungsbetriebe- und Anlagen, die jetzt einzeln auf volkswirtschaftlich aufwendige Monodeponien entsorgt werden müssen, in eine gemeinsame Deponie entsorgt werden.

Besonders zweckmäßig und vorteilhaft wird die Deponie in Hochlage errichtet. Derartige Deponien können an beliebigen Standorten angelegt werden. Eine Grundwasserberührung ist in jedem Fall ausgeschlossen.

In einer Ausgestaltung der Erfindung werden die Formsteine mit Nut und Feder, vorzugsweise mit einem allseitigen Nut- und Federsystem hergestellt und je nach Herkunft und Art der eingesetzten Abfallstoffe mit einer Kennzeichnung versehen werden und die Errichtung des Deponiekörpers mit den sich verzahnenden druckfesten Kompaktaten vorgenommen wird und diese sowohl zur Bildung von horizontalen als auch von vertikalen Kontrollgängen und -schächten in einer solchen Art und Weise eingestapelt werden, daß die Deponie auf Dauer von innen her kontrollierbar ist. Durch die Herstellung der Formsteine mit Nut und Feder wird eine hohe Eigenstabilität beim Stapeln erzielt, insbesondere wenn das Nut- und Federsystem allseitig vorgesehen ist.

Zur Trennung unterschiedlicher, chemisch nicht verträglicher Deponiestoffe werden die jeweiligen Abfallstoffe gesondert eingestapelt. Zwischen den einzelnen Deponiestapeln werden wasserundurchlässige Isolierschichten eingebracht. Die Kennzeichnung erfolgt zweckmäßigerweise bereits im Kompaktierungswerk, beispielsweise durch Einfärben des jeweiligen Kompaktates oder Einpressen von Kennziffern und Kennsignaturen oder dergleichen. Bei der erfindungsgemäß dargestellten Methode werden so errichtete Deponien wieder aufnehmbar. Dieses kann erforderlich werden, wenn sich herausstellt, daß die Deponie zukünftig an dem einmal gewählten Standort aus Umweltgründen entfernt bzw. versetzt werden muß oder für den Fall, daß die in dem Deponiekörper enthaltenen Stoffe durch zukünftige technische Entwicklungen im Recycling zu wertvollen Rohstoffen werden. Durch das gesonderte Einstapeln einzelner Abfallstoffe auf ein und dergleichen Deponie wird die gemeinsame Einbringung von bisher unverträglichen Abfällen unproblematisch.

In einer weiteren Variante der Erfindung werden als Bindemittel für die Erzeugung der Formsteine bzw. Kompaktate Sand, Zemente, Sonderzemente, Kalk- und kalkverwandte Bindemittel, Gips- und gipsverwandte Bindemittel, Rauchgasgipse und puzzolanisch reagierende Mineralien und Stäube verwendet.

Besonders vorteilhaft werden bei der Kompaktierung zur Herabsetzung der Auslaugbarkeit der eingesetzten Ausgangsstoffe und zur Beschleunigung der Abbindevorgänge quarzhaltige Sande (Bausande), granulierte oder gebrochene Verbrennungsschlacken, Rostaschen, Kombinationen der vorbezeichneten Stoffe und Recycling- Materialien verwendet.

Verdichtung und Herabsetzung der Eluierbarkeit werden durch Einsatz von Zusatzstoffen verbessert. Die eingesetzten Zusatzmittel müssen im Hinblick auf ihre Auswirkung auf die Umwelt als auch im Hinblick auf die Langzeitverträglichkeit bemessen werden. Als Zusatzmittel werden erfindungsgemäß organische oder synthetische Produkte verwendet, die als Bindemittelzusätze bekannt sind.

Als Zusatzstoffe werden zweckmäigerweise Bitumen oder Epoxydharze, insbesondere in Form von Schmelzen, Lösungen oder Emulsionen, Epoxydharze als lösungsmittelfreie oder - haltige heiß- oder kalthärtende Zubereitungen, auch in dispergierter Form mit allen technisch gebräuchlichen Härtungsmitteln wie Polyaminen, Polyaminoamiden, Polyamiden, Piperazinen, Derivaten des Hydrazins und Säureanhydriden sowie undefinierten Mannichbasen, synthetischen Harzen und modifizierten natürlichen Harzen, speziell Phenol- und Furanharzen, Kondensationsprodukten von Ketonen und Heterocyden sowie Kohlenwasserstoffharzen, sowohl in Form von Schmelzen, Lösungen in organischen Lösungsmitteln als auch in wasserdispergierter Form, Additions- und Reaktionsprodukte von Polyolen und Isocyanaten, speziell Produkte der Reaktion von Wasser mit Isocyanaten, ferner Melaminharze, Digninsulfonate, Naphtalinsulfonsäure und Formaldehydkondensate, sowie hydrolisierbare, siliziumorganische Verbindungen, Oligomere, Siloxanpolymere, Metallseifen oder oligomere und polymere Fluorkohlenwasserstoffe verwendet.

Die eingesetzten Zusatzstoffe wirken auf die das Bindemittel enthaltenden und zu pressenden Ausgangsmischungen durch Veränderung der Grenzflächenspannung benetzungs- und fließfördernd. Es verändert sich die Viskosität und die Strukturviskosität des wässerig/mineralischen Gemisches zur Erzielung einer einwandfreien Verpressbarkeit und anschließenden Bindung. Durch Einsatz von Melaminharzen, Digninsulfonaten, Naphtalinsulfonsäure und Formaldehydkondensaten wird es möglich, sehr geringe Wassermengen zu verwenden mit der Folge, daß die Formkörper äußerst dicht, d. h. besonders poren- und kapillararm werden. Die so behandelten Kompaktate werden auf diese Weise kaum bzw. überhaupt nicht mehr von Wasser durchdrungen. Eine Hydrophobierung der beteiligten Ausgangsstoffe kann sowohl bereits vor dem Einsatz im Kompaktierungsverfahren als auch während des Verfahrens erfolgen, beispielsweise auch durch Verwendung hydrolisierbarer, siliziumorganischer Verbindungen, Oligomeren sowie Siloxanpolymeren, ferner durch Verwendung von Metallseifen oder oligomeren und polymeren Fluorkohlenwasserstoffen.

In einer weiteren vorteilhaften Ausgestaltung der Erfindung werden als Rückstände Filterstäube aus der trockenen Rauchgasreinigung einer Schlammverbrennungsanlage mit einem Gewichtsanteil bis zu 80 %, vorzugsweise 67 bis 63 % in die Mischung eingebracht, und der Anteil an Zuschlagstoffen, insbesondere Sand beträgt bis zu 32 % , vorzugsweise 30 bis 28 %, der Zementanteil bis zu 10 %, vorzugsweise 7 - 9 %. Hierbei handelt es sich um einen Mischbereich, der nachweislich eine optimale Produktqualität, d.h. hohe Festigkeit der Formsteine bei sehr geringer Eluierbarkeit gewährleistet.

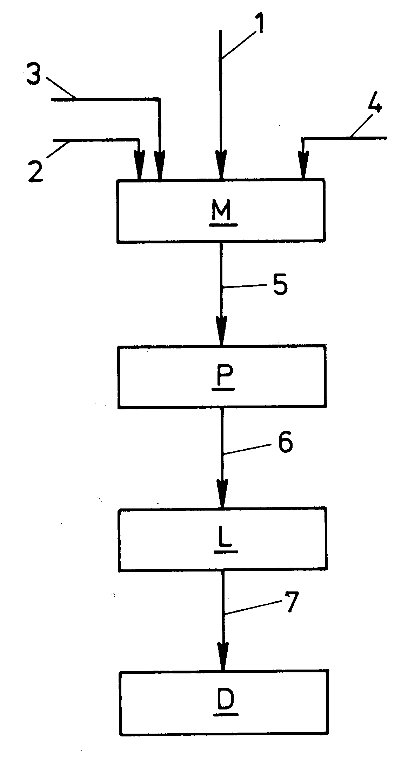

Weitere Einzelheiten, Merkmale und Vorteile der Erfindung ergeben sich aus der nachstehenden Erläuterung des in der Zeichnung schematisch dargestellten Verfahrensablaufes.

Die in verschiedenen industriellen Feuerungsanlagen anfallenden Stäube, Aschen und Schlacken (1) werden beispielsweise in geschlossenen Silofahrzeugen einer zentralen Kompaktierungsanlage zugeführt, bestehend im wesentlichen aus einer Mischanlage (M) und einer Presse (P). Sie werden in abgeschlossene Stahlhochsilos eingeblasen und von dort beispielsweise über Schnecken und Waagen der Mischanlage (M) zugeführt. Die Mischanlage (M) wird gleichzeitig mit Sand (2), Zement (3) und Zuschlagstoffen (4) beaufschlagt. Der Mischvorgang erfolgt zentral in hermetisch abgeschlossenen Maschinen, so daß umweltschädigende Staubaustritte unterbunden sind.

Aus der Mischanlage (M) erfolgt der Austrag des feuchten Gemisches (5) direkt auf die Kompaktierungs-, d.h. Kalksandsteinpressen (P). Hier wird die Mischung (5) verdichtet und erhält als Kompaktat (6) ihre endgültige Form. Die Kompaktate (6) werden abgestapelt und einer Zwischenlagerung (L) unterzogen, wobei nach entsprechender Abbindezeit, d. h. erfolgter Aushärtung die so erzeugten Formsteine (7) auf Lastfahrzeuge per Kran mit Steingreifer verladen und auf die Enddeponie (D) abgefahren werden.

Die jeweiligen Rezepturen (2, 3, 4) richten sich nach dem chemischen Aufbau der Ausgangsstoffe (1) und nach den Erfordernissen des Endproduktes (7) aus abfallrechtlicher Sicht.

Die erfindungsgemäßen Stapeldeponien (D) können sowohl in Tieflage als auch in Hochlage angelegt werden. Für Deponien in Tieflage eignen sich insbesondere bereits abgebaute Kiesgruben, Tongruben, Steinbrüche und dergleichen. Deponien in Hochlage können an beliebigen Standorten angelegt werden. Der Untergrund der infrage kommenden Deponieflächen wird bodenmechanisch bis zur erforderlichen Standfestigkeit verdichtet. Hierauf wird eine kapillarbrechende Schicht (wasserdurchlässige Dränschicht) aufgebracht und ebenfalls standfest verdichtet. Auf den so hergerichteten Unterbau wird eine Betonsohle in wasserundurchlässigem Beton hergestellt, dessen Wasseraufsaugvermögen durch Einsatz eines hydrophobierenden Dichtungsmittels aufgehoben ist. Als zusätzliche Dichtungsmöglichkeiten der Deponieaufstandsfläche werden erforderlichenfalls Abdichtungen aus Dachpappe, Bitumenbahnen, Kunststoffdichtungen, Asphaltmastix, zementgebundene Dichtungsschlämme, Kunststoffbeschichtungen, beispielsweise aus Epoxydharz, Polyurethan, Polyester, PMMA sowie deren Kombinationen mit Bitumen und Teer, bituminöse Spachtelmassen und wasserabweisende und wasserundurchlässige Estriche als zusätzlicher mechanischer Schutz aufgebracht.

Die aufgehenden Wände und Deponieoberflächen werden durch bituminöse Deckanstriche, Spachtelmassen oder Spritzbeton aus Bitumenemulsionen/Zementgemischen, Bitumenbahnen, Dachpappen, Kunststoffdichtungsbahnen, Kunststoffbeschichtungen, zementgebundene Dichtungsschlämme, Spritzbeton, dem Einsatz von Dränageschichten (Betonfiltersteine), Dränmatten und - platten sowie durch natürliche Filtermaterialien abgedichtet.

Die Bodenplatte wird mit entsprechenden Entwässerungssystemen zur Abführung von anfallenden Oberflächenwässern (hier insbesondere Niederschlagswasser) versehen, beispielsweise begehbaren und befahrbaren Rinnensystemen. Die Entwässerung wird zu einem Sammelschacht orientiert. In diesem wird das anfallende Deponiesickerwasser gesammelt und ständig überwacht. Je nach Art der anfallenden Sickerwässer werden diese entweder schadlos entsorgt oder dem Kompaktierungsprozeß wieder zugeführt, so daß nachteilige Auswirkungen auf das Grundwasser wirksam auf Dauer ausgeschlossen werden.

Die mit Nut- und Federsystem ausgestatteten Kompaktate (6) bzw. Deponiesteine (7) werden im Verbundsystem lagen- bzw. schichtweise auf der Deponie (D) derart eingestapelt, daß keine durchgehenden vertikalen Fugen entstehen. Durch diese Stapelmethode wird zum einen die Standfestigkeit der Deponie (D) gewährleistet, zum anderen ist sichergestellt, daß Niederschlagswässer die Deponie (D) nicht durchsickern. Die jeweiligen Seitendichtungen des Deponiekörpers werden mit der wachsenden Deponie wie vorbeschrieben hergestellt. Der so abgedichtete Deponiekörper wird mit Filtermaterialien, wie Sanden und Kiesen, Abraumsanden aus Steinbrüchen, grundwasserunschädlichen Schlacken oder dergleichen verfüllt. Die Filterschichten werden nach Einbringung standfest verdichtet.

### Beispiel I:

Filterstäube aus der trockenen Rauchgasreinigung einer Schlammverbrennungsanlage mit teilweise erhöhten Zink- und Bleigehalten neben geringeren Anteilen an Cadmium und anderen Schwermetallen wurden mit einem Gewichtsanteil von 63 % mit 9 % Zement PZ45F und 28 % gewaschenem Sand gemischt. Die spezifischen Oberflächen (nach Blaine) der eingesetzten Stäube betrugen in etwa 0,96 m²/g, die Werte für den Zement lagen bei 0,39 m²/g. Mit Bezug auf die Zementzugaben wurden 2,5 Gew. % Zusatzstoffe hinzugemischt und die Mischung in einer Kalksandsteinpresse zu Kompaktaten verpreßt. Die Kompaktate wurden in einer Abbindehalle zwischengelagert. Die fertigen Deponiesteine wurden als ganze Steine in entmineralisiertem Wasser (in Anlehnung an DIN 38414-S 4) eluiert. Die Formsteine hatten Abmessungen normaler Kalksandsteine von 24 x 17,4 x 10,8 cm mit einem Volumen von 4,2 dm³, einer Oberfläche von 19,7 dm² und einem Gewicht von 8 kg. Die Eluatanalyse für das reguläre Eluat wies folgende Werte auf: pH-Wert <10,9; Leitfähigkeit ca 1600 uS/cm; CSB 8 mg/l, Kohlenwasserstoffe 0,1, AOX (Cl) 0,005, Barium 0,15, Blei 0,22, Bor 0,075, Cadmium <0,002, Chrom (gesamt) 0,009, Eisen (gelöst) 0,004, Kupfer <0,002, Mangan <0,01, Quecksilber <0,0005, Fluorid <0,005, Ammoniak <0,005, Chlorid 680, Cyanide (gesamt) <0,005, Nitrat 2,6, Nitrit 0,18, Phosphat 3,5, Sulfat 34; Gesamthärte dH 40. Es wurden Kompaktatdichten im Mittel von 1,6 - 1,7 kg/dm³ erzielt. Die Durchlässigkeitsbeiwerte nach DARCY (k-Werte gemäß DIN 18130) lagen im Bereich zwischen 10⁻⁷ und 10⁻⁸ m/s.

Die Druckfestigkeit nach einer Abbindezeit von ca. 28 Tagen betrug zwischen 12 - 15,7 N/mm².

### Beispiel II:

Es wurden Steinformate ohne Griffloch gepreßt mit Abmessungen von 24 x 17,5 x 11,3 cm. Als Bindemittel wurde ein Zement PZ 45 F - HS eingesetzt. Es erfolgte eine Verpressung unter Hochdruck, d. h. bei ca. 140 bis 160 bar, um im Kompaktat die Wasserdurchdringung ganz zu verhindern. Auf diese Weise wurden Dichten von 2,07 - 2,2 kg/dm³ erzielt. Die Druckfestigkeit betrug nach 44 Stunden Abbindezeit bereits 18,8 N/mm², wobei nach ca. 28 Tagen Festigkeiten zwischen 22 bis 25 N/mm² erreicht wurden. Die Durchlässigkeitsbeiwerte betrugen 10⁻⁸ bis 10⁻¹⁰ m/s. Das bedeutet, daß diese Kompaktate Durchlässigkeitswerte erreichen, die unter den Werten von Tonabdichtungen liegen, wie sie üblicherweise zur Abdichtung konventioneller Bauschuttdeponien eingesetzt werden. Mit dem erfindungsgemäßen Verfahren wird aus Sondermüll deponierfähiger Bauschutt, wobei die innere Oberfläche und die Wasserdurchlässigkeit als Maße für die Eluierbarkeit soweit verringert werden, daß das Kompaktat in jeden Fall auf Bauschuttdeponien abgelagert werden kann.

## Patentansprüche

1. Verfahren zur Verarbeitung von Rückständen aus Verbrennungsanlagen, wobei die Rückstände mit Bindemitteln und/oder Zuschlagstoffen vermischt und nach Art der Kalksandsteinherstellung mit hohem Preßdruck unter starker Verdichtung zu stapelfähigen Formsteinen verpreßt werden, **dadurch gekennzeichnet,** daß die Formsteine mit Rostaschen, Verbrennungsschlacken und/oder mineralischen Rückstäuben aus der nassen, halbtrockenen und trockenen Rauchgasreinigung mit hoher Kontaminierung und toxischen Stoffen zur umweltneutralen Entsorgung schwer- bzw. überhaupt nicht mehr eluierbar hergestellt und als Baumaterial zur Errichtung einer Deponie in Hoch- und /oder Tieflage zugeführt und dabei unter Bildung von begehbaren Kontrollgängen und -schächten im Innern der Deponie in regelmäßiger Anordnung neben- und/oder übereinander gestapelt werden.

2. Verfahren nach Anspruch 1, **dadurch gekennzeichnet,** daß die Formsteine mit Nut und Feder, vorzugsweise mit einem allseitigen Nut- und Federsystem hergestellt und je nach Herkunft und Art der eingesetzten Abfallstoffe mit einer Kennzeichnung versehen werden und die Errichtung des Deponiekörpers mit den sich verzahnenden druckfesten Kompaktaten vorgenommen wird und diese sowohl zur Bildung von horizontalen als auch von vertikalen Kontrollgängen und - schächten in einer solchen Art und Weise eingestapelt werden, daß die Deponie auf Dauer von innen her kontrollierbar ist.

3. Verfahren nach Anspruch 1 oder 2, **dadurch gekennzeichnet,** daß als Bindemittel für die Erzeugung der Formsteine bzw. Kompaktate Sand, Zemente, Sonderzemente, Kalk- und kalkverwandte Bindemittel, Gips- und gipsverwandte Bindemittel, Rauchgasgipse und puzzolanisch reagierende Mineralien und Stäube verwendet werden.

4. Verfahren nach einem oder mehreren der Ansprüche 1 bis 3, **dadurch gekennzeichnet,** daß bei der Kompaktierung zur Herabsetzung der Auslaugbarkeit der eingesetzten Ausgangsstoffe und zur Beschleunigung der Abbindevorgänge quarzhaltige Sande (Bausande), granulierte oder gebrochene Verbrennungsschlacken, Rostaschen, Kombinationen der vorbezeichneten Stoffe und Recycling- Materialien verwendet werden.

5. Verfahren nach einem oder mehreren der Ansprüche 1 bis 4, **dadurch gekennzeichnet,** daß als Zusatzstoffe Bitumen oder Epoxydharze, insbesondere in Form von Schmelzen, Lösungen oder Emulsionen, Epoxydharze als lösungsmittelfreie oder - haltige heiß- oder kalthärtende Zubereitungen, auch in dispergierter Form mit allen technisch gebräuchlichen Härtungsmitteln wie Polyaminen, Polyaminoamiden, Polyamiden, Piperazinen, Derivaten des Hydrazins und Säureanhydriden sowie undefinierten Mannichbasen, synthetischen Harzen und modifizierten natürlichen Harzen, speziell Phenol- und Furanharzen, Kondensationsprodukten von Ketonen und Heterocyden sowie Kohlenwasserstoffharzen, sowohl in Form von Schmelzen, Lösungen in organischen Lösungsmitteln als auch in wasserdispergierter Form, Additions- und Reaktionsprodukte von Polyolen und Isocyanaten, speziell Produkte der Reaktion von Wasser mit Isocyanaten, ferner Melaminharze, Ligninsulfonate, Naphtalinsulfonsäure und Formaldehydkondensate, sowie hydrolisierbare, siliziumorganische Verbindungen, Oligomere, Siloxanpolymere, Metallseifen oder oligomere und polymere Fluorkohlenwasserstoffe verwendet werden.

6. Verfahren nach einem oder mehreren der Ansprüche 1 bis 5, **dadurch gekennzeichnet,** daß als Rückstände Filterstäube aus der trockenen Rauchgasreinigung einer Schlammverbrennungsanlage mit einem Gewichtsanteil bis zu 80 %, vorzugsweise 67 bis 63 % in die Mischung eingebracht werden, und ein Anteil an Zuschlagstoffen, insbesondere Sand, bis zu 32 % , vorzugsweise 30 bis 28 %, ein Zementanteil bis zu 10 %, vorzugsweise 7 - 9 % beträgt.

## Claims

1. Method for the treatment of residues from incinerators, in which the residues are mixed with binders and/or aggregates and after the manner of sand-lime brick manufacture are compressed with high pressing power under strong compaction into stackable shaped blocks, **characterised in that** the shaped blocks containing grate ashes, incineration slags and/or mineral return dusts from wet, semi-dry and dry flue gas purification with high contamination and containing toxic substances are for the purpose of environmentally neutral disposal manufactured scarcely elutable or completely non-elutable and are supplied as building material for the construction of a tip at high and/or low level and in so doing are stacked in a regular arrangement next to and/or above one another with the formation of man-sized inspection galleries and shafts inside the tip.

2. Method according to claim 1, **characterised in that** the shaped blocks are manufactured with groove and tongue, preferably with an all-round groove and tongue system, and are provided with a coding according to the origin and nature of the waste materials used and the construction of the tip body is undertaken with the interlocking compression-proof compactates and the latter are stacked for the formation both of horizontal and of vertical inspection passages and shafts in such a manner that the tip is permanently inspectable from the inside.

3. Method according to claim 1 or 2, **characterised in that** there are used as binders for producing the shaped blocks or compactates sand, cements, special cements, lime and lime-related binders, gypsum and gypsum-related binders, flue gas gypsums and pozzolanically reacting minerals and powders.

4. Method according to one or more of claims of claims 1 to 3, **characterised in that** use is made during the compacting, in order to reduce the leachability of the starting materials used and to accelerate the setting processes, of quartz-containing sands (building sands), granulated or broken incineration slags, grate ashes, combinations of the above-mentioned substances and recycled materials.

5. Method according to one or more of claims of claims 1 to 4, **characterised in that** there are used as additives bitumen or epoxy resins, in particular in the form of melts, solutions or emulsions, epoxy resins as solvent-free or solvent-containing hot- or cold-setting preparations, also in dispersed form with all industrially used setting agents such as polyamines, polyaminoamides, polyamides, piperazines, hydrazine derivatives and acid anhydrides as well as undefined Mannich bases, synthetic resins and modified natural resins, specifically phenolic and furane resins, condensation products of ketones and heterosides as well as hydrocarbon resins, both in the form of melts, solutions in organic solvents and also in water-dispersed form, addition and reaction products of polyols and isocyanates, specifically products of the reaction of water with isocyanates, also melamine resins, lignin sulphonates, napththalene-sulphonic acid and formaldehyde condensates, as well as hydrolysable, organic silicon compounds, oligomers, siloxane polymers, metallic soaps or fluorocarbon oligomers and polymers.

6. Method according to one or more of claims of claims 1 to 5, **characterised in that** as residues filter dusts from the dry flue gas purification of a sludge incineration plant in a portion by weight of up to 80%, preferably 67 to 63%, are introduced into the mixture, and a portion of aggregates, in particular sand, comes to up to 32%, preferably 30 to 28%, and a cement portion up to 10%, preferably 7 - 9%.

## Revendications

1. Procédé pour le traitement de résidus provenant d'installations de combustion, les résidus étant mélanges avec des liants et/ou des adjuvants et, selon le mode de fabrication de la pierre chaux-grès, comprimés à haute pression de moulage sous puissant compactage en briques moulées, que l'on peut empiler, caractérisé en ce que les briques moulées sont fabriquées avec des cendres de grille, des scories de chaudières et/ou des poussières résiduelles minérales provenant d'un dépoussiérage humide, demi-sec ou sec présentant une contamination élevée et avec des substances toxiques pour l'environnement lors de leur élimination et ne pouvant que difficilement ou plus du tout être éluées, sont apportées comme matériau de construction pour l'implantation d'une décharge en superstructure ou en profondeur et, là, y sont empilées en un ordonnancement régulier les unes à côté ou au dessus des autres en formant des couloirs et des puits de contrôle accessibles à l'intérieur de la décharge.

2. Procédé selon la revendication 1, caractérisé en ce que les briques moulées sont fabriquées avec rainure - languette, de préférence avec un système rainure - languette existant sur tous les côtés et sont pourvues, selon la provenance et le type de déchets mis en place, d'une marque caractéristique et en ce que la construction du corps de décharge est entrepris avec les matériaux compactés résistants à la pression imbriqués et ceux-ci étant, aussi bien pour la formation de couloirs horizontaux que de puits verticaux de contrôle, empilés de manière telle que la décharge peut être contrôlée en permanence à partir de l'intérieur.

3. Procédé selon la revendication 1 ou 2, caractérisé en ce que les liants utilises pour la production des briques et des matériaux compactes sont du sable, des ciments spéciaux, du calcaire ou un liant apparente, du gypse ou un liant apparenté, des plâtres de gaz de combustion et des minéraux et des poussières reactifs a base de pouzzolane.

4. Procédé selon l'une ou plusieurs des revendications 1 à 3, caractérisé en ce que lors du compactage en vue de diminuer le lessivage des matières premières employées et pour accelérer les processus de prise, l'on utilise des sables quartzifères (sables de construction), des scories de chaudières en grenaille ou broyées, des cendres de grille, des combinaisons des matériaux mentionnés précédemment et des matériaux de recyclage.

5. Procédé selon l'une ou plusieurs des revendications 1 à 4, caractérisé en ce que les adjuvants utilisés sont du bitume ou des résines époxydes, sous forme de fusions, de solutions ou d'émulsions notamment, des résines époxydes en préparations avec ou sans solvant, durcissant à chaud ou à froid, sous forme dispersée également comportant tous agents de durcissement techniques usuels tels que des polyamines, des polyaminoamides, des polyamides, des pipérazines, des dérivés de l'hydrazine et d'anhydrides d'acides, ainsi que des bases de Mannich non définies, des résines synthétiques et des résines naturelles modifiées, des résines spéciales à base de phénol ou de furane, des produits de condensation de cétones et d'hétérocydènes ainsi que des résines aussi bien que sous forme de fusions, de solutions dans des solvants organiques mais encore sous forme de dispersions aqueuses, des produits d'addition et de réactions de polyols et d'isocyanates, des produits spéciaux de réaction de l'eau avec des isocyanates, en outre, des résines de mélamine, des Ligninsulfonates, des acides naphtalinosulfoniques et des condensats d'aldéhydes formiques, ainsi que des composés organiques de silicium hydrolisables, des oligomères, des polymères de siloxane, des savons métalliques ou des hydrocarbures fluorés oligomères et polymères.

6. Procédé selon l'une ou plusieurs des revendications 1 à 5, caractérisé en ce que les détritus utilisés sont des poussières de filtrage provenant d'un dépoussiérage sec d'une installation de combustion de boues pour un pourcentage en poids dans le mélange allant jusqu'à 80 %, de 67 a 63 % de préférence, la proportion d'adjuvants, de sable notamment, s'élevant jusqu'à 32 %, de 30 à 28 % de préférence, la proportion de ciment allant jusqu'à 10 %, de 7 à 9 % de préférence.
